# DEMANDE DE BREVET EUROPEEN

(11) **EP 3 579 259 A1**
(43) Date de publication de la demande: **11.12.2019**
(21) Numéro de dépôt: 19177411.6
(22) Date de dépôt: 29.05.2019
(51) Int. Cl.: H01H 3/02, H01H 9/06, H01H 9/16, F16P 3/14, H01H 9/02

(54) **DISPOSITIF HOMME MORT AUTONOME**

(30) Priorité: 04.06.2018 FR 1854817
(71) Demandeur: Titan Aviation, 69400 Villefranche-Sur-Saone (FR)
(72) Inventeur: AMANN, Yves, 69007 LYON (FR); HERAULT, Richard, 69007 LYON (FR)
(74) Mandataire: Cabinet Bleger-Rhein-Poupon

(57) **Abrégé**

L'invention concerne un dispositif homme mort (1), comprenant :
-un actionneur mobile (2), susceptible d'être sollicité par un opérateur ;
-un circuit d'émission (4) d'un signal indicatif d'une sollicitation de l'actionneur ;
-un transducteur électromécanique (41), sollicité par un mouvement de l'actionneur mobile, alimentant électriquement ledit circuit d'émission lors de sa sollicitation par l'actionneur mobile.

## Description

L'invention concerne les dispositifs homme mort, et en particulier les dispositifs homme mort destinés à fonctionner dans un environnement hostile ou présentant des exigences de sécurité élevées.

Les dispositifs dits homme mort sont destinés à tester la présence, l'attention ou la pleine conscience d'un opérateur. De tels dispositifs sont notamment utilisés dans le domaine de l'avitaillement aéroportuaire. Un opérateur commandant une pompe de remplissage d'un aéronef doit notamment actionner un dispositif homme mort à intervalles réguliers, afin de maintenir le flux de carburant à destination de l'aéronef. En l'absence d'actionnement du dispositif par l'opérateur après cette durée prédéterminée, le flux de carburant vers l'aéronef est coupé.

Un dispositif connu comporte une poignée munie d'un levier. Le dispositif est relié par un câblage électrique à un système de pompage. Une intervention sur le levier permet de fermer un contacteur présent dans la poignée, et ainsi de fermer un circuit électrique formé par l'intermédiaire du câblage électrique. La fermeture du circuit électrique permet de réinitialiser un compte à rebours dans un système de sécurité du système de pompage. Tant que le compte à rebours n'expire pas, le système de pompage peut poursuivre une alimentation en carburant de l'aéronef. A contrario, si le compte à rebours expire, le système de pompage interrompt l'alimentation en carburant, en obturant par exemple une vanne.

En pratique, un tel dispositif homme mort s'avère peu ergonomique, l'opérateur devant conserver la poignée dans la main et étant gêné dans ses mouvements par la présence du câblage filaire. Les déplacements de l'opérateur sont notamment extrêmement limités.

Des dispositifs homme mort autonomes sous forme de poignées sans fil ont également été développés. De tels dispositifs incluent notamment un émetteur, configuré pour émettre un signal à destination du système de sécurité, lors de l'activation d'un actionneur. Le circuit émetteur est alimenté électriquement par l'intermédiaire d'une batterie rechargeable.

L'utilisation des batteries induit un coût de maintenance élevé, ces batteries devant notamment être remplacées à intervalles réguliers. Les batteries nécessitent en outre une certaine logistique, des batteries rechargées devant en permanence être à disposition de l'opérateur, à proximité du dispositif homme mort. L'absence d'une batterie rechargée implique en effet que le système associé au dispositif homme mort ne peut pas être utilisé. La recharge d'une telle batterie n'est en outre pas une opération anodine. En effet, dans un environnement hostile, il se peut qu'aucune source électrique de recharge ne soit disponible, notamment pour des raisons réglementaires. Il est notamment interdit de se connecter à la batterie d'un véhicule dans une zone aéroportuaire, pour assurer la recharge d'une batterie de dispositif homme mort.

L'invention vise à résoudre un ou plusieurs de ces inconvénients. L'invention porte ainsi sur un dispositif homme mort, tel que défini dans la revendication 1 annexée.

L'invention porte également sur les variantes des revendications dépendantes. L'homme du métier comprendra que chacune des caractéristiques de la description ou des revendications dépendantes peut être combinée indépendamment aux caractéristiques d'une revendication indépendante, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique d'un système dans lequel un dispositif homme mort selon l'invention peut être mis en oeuvre ;
- la figure 2 est une vue en coupe d'un exemple d'un premier mode de réalisation d'un dispositif homme mort selon l'invention ;
- la figure 3 est une vue de dessus d'un exemple d'un deuxième mode de réalisation d'un dispositif homme mort selon l'invention ;
- la figure 4 est une vue en coupe du dispositif homme mort de la figure 3.

L'invention propose un dispositif homme mort autonome, comportant un circuit d'émission d'un signal indicatif d'une sollicitation de l'actionneur. Le circuit d'émission est alimenté par l'énergie d'actionnement d'un actionneur mobile. Un transducteur électromécanique, sollicité par un mouvement de l'actionneur mobile, alimente électriquement le circuit d'émission. Lorsque le circuit d'émission détecte une sollicitation de l'actionneur, il peut émettre un signal indicatif à destination d'un système de sécurité.

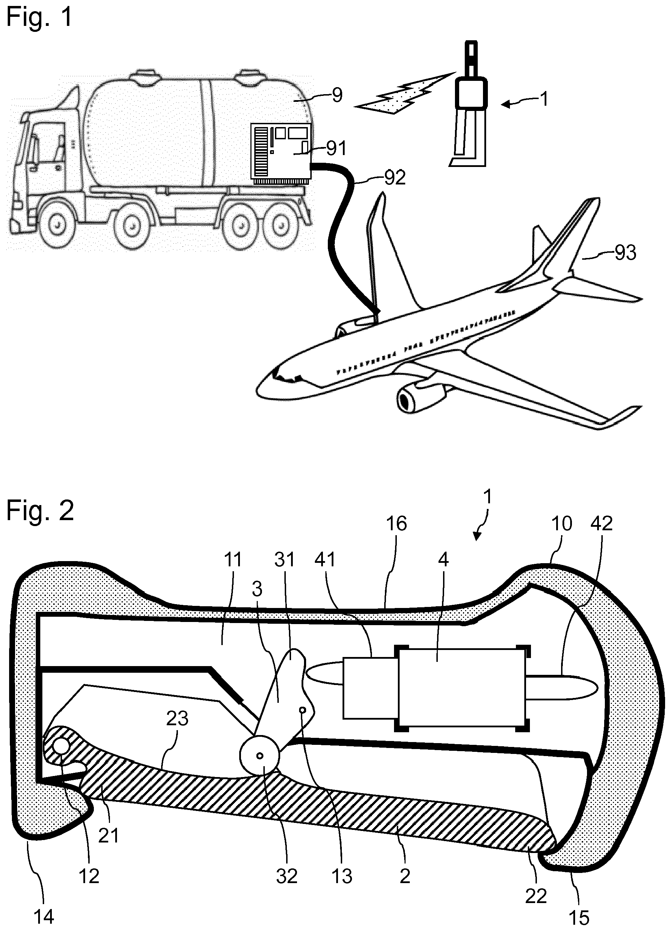

La figure 1 est une représentation schématique d'un exemple de système dans lequel un dispositif homme mort 1 selon l'invention est susceptible d'être mis en oeuvre. Un camion citerne 9 est disposé à proximité d'un aéronef 93. Un flexible 92 du camion citerne est connecté au réservoir de l'aéronef 93. Un système de sécurité 91 du camion citerne 9 contrôle l'écoulement de carburant vers le réservoir de l'aéronef 93. Le système de sécurité 91 peut par exemple commander une ou plusieurs vannes et une ou plusieurs pompes de carburant non illustrées ici, afin d'interrompre sélectivement l'écoulement à travers le flexible 92.

Un dispositif homme mort 1 est configuré pour communiquer sans fil avec le système de sécurité 91, pour envoyer un signal indicatif d'un actionnement d'un actionneur par un opérateur. De façon connue en soi, le dispositif de sécurité 91 interrompra l'écoulement de carburant vers l'aéronef 93 en l'absence de signal indicatif d'actionnement de l'actionneur du dispositif homme mort 1 avant l'expiration d'un compte à rebours.

La figure 2 est une vue en coupe schématique d'un exemple d'un mode de réalisation d'un dispositif homme mort 1. Dans ce mode de réalisation, le dispositif homme mort 1 se présente avantageusement mais non limitativement sous la forme d'une poignée.

Le dispositif homme mort 1 comporte un actionneur mobile 2. Le dispositif homme mort 1 comporte un corps 10, sur lequel l'actionneur 2 est monté mobile avec au moins un degré de liberté. Le corps 10 comporte une surface de préhension 16 pour permettre une saisie optimale par un opérateur. La surface de préhension 16 est destinée à fournir un appui pour la paume de la main d'un opérateur.

L'actionneur 2 se présente ici sous la forme d'un levier monté pivotant autour d'un axe 12 par rapport au corps 10. Le levier est destiné à être sollicité par les doigts d'un opérateur, afin de le rapprocher de la surface de préhension 16. Le levier est ici mobile entre une position de repos et une position d'activation.

Le dispositif homme mort 1 comporte un transducteur électromécanique 41. Le transducteur 41 est configuré pour être sollicité par un mouvement de l'actionneur mobile 2. Le transducteur 41 est configuré pour transformer de l'énergie mécanique apportée par l'actionneur 2 en énergie électrique.

Lors d'un mouvement de l'actionneur 2, celui-ci sollicite un arbre à cames 3 en rotation. La rotation de l'arbre à cames 3 autour d'un axe 13 sollicite un élément mobile du transducteur 41 en translation, par l'intermédiaire d'une came 31. L'arbre 3 comporte un galet 32 disposé à l'opposée de la came 31 par rapport à l'axe 13. Lors de la sollicitation de l'actionneur 2, le galet 32 parcourt une piste 23 ménagée sur une face interne de l'actionneur 2, entraînant l'arbre 3 en rotation.

L'opérateur étant obligé de solliciter l'actionneur 2 à intervalle réguliers, l'opérateur va alors apporter de l'énergie mécanique au dispositif homme mort 1. L'énergie électrique générée par le transducteur 41 est utilisée pour alimenter électriquement un circuit d'émission 4. L'énergie électrique générée peut être stockée temporairement dans un organe de stockage connu en soi, tel qu'un condensateur. Ainsi, l'énergie électrique générée lors d'une rotation de l'actionneur 2 permet d'alimenter le circuit d'émission 4. L'invention permet ainsi de se dispenser d'une interface de recharge par l'extérieur ou de batteries rechargeables amovibles. Ainsi, le dispositif homme mort 1 selon l'invention peut être utilisé à tout moment, même après avoir été stocké un certain temps sans maintenance.

Le circuit d'émission 4 est configuré pour émettre un signal indicatif d'une sollicitation de l'actionneur 2. Le circuit d'émission 4 comporte ainsi une antenne d'émission 42. Le circuit d'émission 4 peut inclure de façon connue en soi un circuit radiofréquence pour exciter l'antenne 42 selon une fréquence et un protocole appropriés. Le circuit d'émission 4 peut notamment inclure un commutateur, dont le changement d'état commande une émission du signal indicatif d'une sollicitation.

Avantageusement, le commutateur peut être inclus dans le transducteur électromécanique 41, de sorte que la sollicitation du transducteur 41 permet à la fois d'alimenter le circuit d'émission 4 et de lui fournir un état logique de la position de l'actionneur 2. Le commutateur peut présenter un premier état lorsque l'actionneur 2 est dans sa position de repos et un deuxième état lorsque l'actionneur 2 est dans sa position d'activation.

Avantageusement, pour consommer un minimum d'énergie, le circuit d'émission 4 émet le signal indicatif d'une sollicitation seulement suite à un changement d'état de son commutateur. Avantageusement, le circuit d'émission 4 émet le signal indicatif d'une sollicitation seulement lors d'un changement d'état de son commutateur, correspondant au retour de l'actionneur 2 à sa position de repos. Ainsi, le transducteur 41 a pu préalablement générer davantage d'énergie pour le circuit d'émission 4, lors du passage de l'actionneur 2 de la position de repos à la position d'activation, et lors de son retour à sa position de repos.

Avantageusement, le dispositif 1 est muni d'un organe de rappel, tel qu'un ressort (non illustré), afin de rappeler l'actionneur 2 vers sa position de repos. D'une part, cela permettra de faciliter une sollicitation ultérieure de l'actionneur 2 par l'utilisateur, d'autre part, cela fournira de l'énergie mécanique au transducteur 41 lors du retour de l'actionneur 2 vers sa position de repos. Une telle configuration permettra également de détecter plus tôt un problème de l'opérateur, par exemple si celui-ci maintient en continu l'actionneur 2 en position d'activation. Un organe de rappel peut être intégré à l'intérieur du transducteur 41.

Pour une application aéronautique, le circuit d'émission 4 est avantageusement configuré communiquer dans une bande de fréquence centrée sur 868 MHz.

Avantageusement, la puissance d'émission du circuit 4 est limitée, afin de garantir que le dispositif homme mort 1 ne puisse communiquer avec un système de sécurité que lorsque la distance entre ceux-ci est réduite.

La société Steute commercialise notamment un capteur de fin de course sous la référence IP67. Ce capteur inclut un transducteur électromécanique et un commutateur, ainsi qu'un circuit d'émission alimenté par la sollicitation de ce transducteur électromécanique. Un tel capteur peut ainsi intégrer les fonctions de transducteur électromécanique 41 et de circuit d'émission du dispositif homme mort 1 selon l'invention. Un tel capteur est en outre agréé pour un fonctionnement en présence de gaz inflammable ou en présence d'humidité.

Le transducteur 41 et le circuit d'émission 4 sont ici avantageusement logés dans une cavité 11 à l'intérieur du corps 10 pour les protéger de l'environnement extérieur.

Avantageusement, le dispositif homme mort 1 est configuré pour éviter des sollicitations accidentelles de l'actionneur 2, par exemple en cas de chute du dispositif 1.

Dans l'exemple illustré à la figure 2, le corps 10 comporte avantageusement deux protubérances 14 et 15 positionnées au niveau de deux extrémités respectives 21 et 22 de l'actionneur 2. L'actionneur 2 est ici allongé entre les extrémités longitudinales 21 et 22, la direction longitudinale de l'actionneur 2 étant perpendiculaire à son axe de rotation. La protubérance 14 est en saillie par rapport à l'extrémité 21 de l'actionneur 2, selon une direction perpendiculaire à la direction longitudinale et perpendiculaire à l'axe de rotation de l'actionneur 2. La protubérance 15 est également en saillie par rapport à l'extrémité 22 de l'actionneur 2, selon une direction perpendiculaire à la direction longitudinale et perpendiculaire à l'axe de rotation de l'actionneur 2. Une telle configuration permet de limiter des interférences accidentelles avec l'actionneur 2 (par exemple lors d'une chute), pouvant occasionner un passage de celui-ci vers sa position d'activation, les protubérances venant en priorité interférer avec un éventuel objet accidentel.

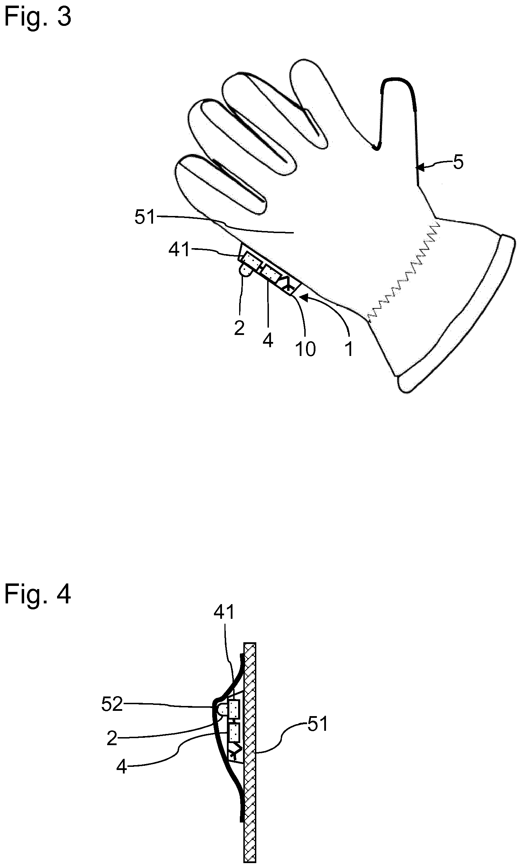

Les figures 3 et 4 illustrent différentes variantes d'un dispositif homme mort 1 selon un autre mode de réalisation de l'invention. Le dispositif homme mort 1 est ici intégré dans un gant 5. L'actionneur mobile 2, le circuit d'émission 4 et le transducteur électromécanique 41 présentent ici les mêmes fonctions que dans le mode de réalisation qui précède et sont fixés sur le gant 5. L'actionneur 2 se présente ici sous la forme d'un bouton poussoir sollicitant le transducteur électromécanique 41. Le déplacement du bouton poussoir permet ainsi au transducteur 41 de générer de l'énergie électrique, fournie pour l'alimentation du circuit d'émission 4. L'opérateur muni d'un tel gant 5 peut ainsi solliciter l'actionneur 2 en appuyant sur le bouton poussoir au moyen de son autre main, ou en appuyant sur sa jambe ou sur un objet externe. L'opérateur peut ainsi réaliser des manipulations d'objets et d'autres opérations tout en activant l'actionneur 2 à intervalles réguliers.

Le gant 5 comporte ici une enveloppe 51, susceptible de recouvrir la main d'un utilisateur pour en assurer la protection. L'actionneur 2 est ici fixé à l'extérieur de cette enveloppe 51, afin de ne pas gêner l'opérateur et de faciliter l'actionnement de cet actionneur 2.

Dans l'exemple illustré, l'actionneur 2 est avantageusement mobile selon une direction perpendiculaire à l'enveloppe 51, à l'emplacement où l'actionneur 2 est fixé.

Dans la variante illustrée à la figure 4, l'actionneur 2 est recouvert par une paroi de protection 52, afin d'éviter une usure prématurée due aux contacts ou à l'environnement. Afin de faciliter l'identification de la position de l'actionneur 2 en présence de cette paroi de protection 52, celle-ci peut comporter un indicateur visuel à l'emplacement dudit actionneur 2. L'indicateur visuel peut par exemple inclure un contraste de couleur, un idéogramme et/ou une surépaisseur.

## Revendications

1. Dispositif homme mort (1), **caractérisé en ce qu'**il comprend :
- un actionneur mobile (2), susceptible d'être sollicité par un opérateur ;
- un circuit d'émission (4) d'un signal indicatif d'une sollicitation de l'actionneur ;
- un transducteur électromécanique (41), sollicité par un mouvement de l'actionneur mobile, alimentant électriquement ledit circuit d'émission lors de sa sollicitation par l'actionneur mobile.

2. Dispositif homme mort (1) selon la revendication 1, comprenant un corps (10) sur lequel est monté l'actionneur mobile (2) avec au moins un degré de liberté, ledit corps (10) comportant une surface de préhension (16).

3. Dispositif homme mort(1) selon la revendication 2, dans lequel l'actionneur mobile (2) est un élément allongé selon une première direction et présentant des première et deuxième extrémités selon cette première direction, le corps (10) comportant des première et deuxième protubérances s'étendant en saillie selon une deuxième direction perpendiculaire à la première, par rapport aux première et deuxième extrémités respectivement.

4. Dispositif homme mort (1) selon la revendication 1, incluant un gant (5) sur lequel sont fixés l'actionneur mobile (2), le circuit d'émission (4) et le transducteur électromécanique (41).

5. Dispositif homme mort (1) selon la revendication 4, dans lequel ledit gant comporte une enveloppe (51) susceptible de recouvrir une main d'un opérateur, ledit actionneur mobile (2) étant fixé à l'extérieur de ladite enveloppe.

6. Dispositif homme mort (1) selon la revendication 5, dans lequel l'actionneur mobile (2) est monté coulissant selon une direction perpendiculaire à l'enveloppe à l'emplacement où l'actionneur est fixé.

7. Dispositif homme mort (1) selon la revendication 5 ou 6, dans lequel ledit actionneur est recouvert par une paroi de protection (52), ladite paroi de protection (52) comportant un indicateur visuel de l'emplacement dudit actionneur.

8. Dispositif homme mort (1) selon l'une quelconque des revendications précédentes, comprenant un organe de rappel de l'actionneur mobile (2) vers une position au repos.

9. Dispositif homme mort (1) selon la revendication 8, dans lequel le circuit d'émission (4) comporte un commutateur présentant un premier état lorsque l'actionneur mobile (2) est sollicité par un opérateur et un deuxième état lorsque l'actionneur (2) est en position de repos, ledit circuit d'émission (4) étant configuré pour émettre un signal de sollicitation de l'actionneur lorsque le commutateur passe du deuxième état vers le premier état.

10. Dispositif homme mort (1) selon la revendication 9, dans lequel ledit commutateur est intégré dans le transducteur électromécanique (41).
